# EUROPEAN PATENT SPECIFICATION

(11) **EP 3 702 482 B1**
(45) Date of publication and mention of the grant of the patent: **29.04.2026**
(21) Application number: 18871166.7
(22) Date of filing: 11.09.2018
(51) Int. Cl.: C22B 23/00, C22B 7/00, C22B 15/00, C22B 3/00, H01M 10/54, H01M 10/0525

(54) **METHOD FOR SEPARATING COPPER, NICKEL, AND COBALT**
VERFAHREN ZUR ABSCHEIDUNG VON KUPFER, NICKEL UND KOBALT
PROCÉDÉ DE SÉPARATION DE CUIVRE, DE NICKEL ET DE COBALT

(30) Priority: 23.10.2017 JP 2017204697
(43) Date of publication of application: 02.09.2020
(73) Proprietor: Sumitomo Metal Mining Co., Ltd., Tokyo 105-8716 (JP)
(72) Inventor: HIGAKI, Tatsuya, Niihama-shi, Ehime 792-0002 (JP); TAKENOUCHI, Hiroshi, Niihama-shi, Ehime 792-0002 (JP); KOBAYASHI, Hiroshi, Niihama-shi, Ehime 792-0002 (JP); ASANO, Satoshi, Niihama-shi, Ehime 792-0002 (JP)
(74) Representative: Watermeyer, Nicholas
(86) International application number: PCT/JP2018/033683
(87) International publication number: WO 2019/082533

(56) References cited:
- EP-A1- 3 690 068
- CN-A- 106 505 272
- JP-A- 2007 323 868
- JP-A- 2010 277 868
- JP-A- 2015 183 292
- US-A- 3 793 429
- XIE Y ET AL: "Recovery of nickel, copper and cobalt from low-grade Ni-Cu sulfide tailings", HYDROMETALLURGY, ELSEVIER SCIENTIFIC PUBLISHING CY. AMSTERDAM, NL, vol. 80, no. 1-2, 1 November 2005 (2005-11-01), pages 54 - 58, XP027652592, ISSN: 0304-386X, [retrieved on 20051101]

## Description

### TECHNICAL FIELD

The present invention relates to a method for separating copper from nickel and cobalt, from an alloy containing copper, nickel, and cobalt.

### BACKGROUND ART

A lithium ion cell (hereinafter, also referred to as "LIB") having light weight and high output is mounted on a vehicle such as an electric car or a hybrid car and an electronic device such as a mobile phone, a smart phone, or a personal computer.

The LIB has a structure in which an outer can formed of a metal such as aluminum or iron or plastic such as vinyl chloride is electric charged with a negative electrode material in which a negative electrode active material such as graphite is firmly fixed onto a surface by using a copper foil in a negative electrode collector, and a positive electrode material in which a positive electrode active material such as lithium nickelate or lithium cobaltate is firmly fixed onto a positive electrode collector formed of an aluminum foil, along with a separator formed of a porous resin film of polypropylene or the like, and an organic solvent containing an electrolyte such as lithium hexafluorsophosphate (LiPF₆) is impregnated as an electrolytic solution.

In a case where the LIB is used by being built in the vehicle, the electronic device, or the like described above, eventually, the LIB is not capable of being used due to the deterioration of the car, the electronic device, or the like, the lifetime of the LIB, or the like, and thus, becomes a waste lithium ion cell (a waste LIB). In addition, the waste LIB may occur as a defective product in a manufacturing process from the beginning.

In such a waste LIB, a valuable component such as nickel, cobalt, or copper is contained, and it is desirable to recover and reuse the valuable component in order for effective utilization of resources.

In the case of efficiently recovering the valuable component from a device that is generally formed of a metal, and a member or a material, a dry treatment using a dry smelting technology in which the device, and the member or the material are put into a furnace or the like and are fused at a high temperature, and are separated into a metal that is a valuable resource and a slag subjected to disposal is considered as a quick method.

For example, in Patent Document 1, a method of recovering a valuable metal by using the dry treatment is disclosed. By applying the method of Patent Document 1 to the waste LIB, it is possible to obtain a copper alloy containing nickel and cobalt.

Such a dry treatment requires energy for heating to a high temperature, but is capable of treating various impurities in a simple process, and of separating the impurities all at once. In addition, the slag to be obtained has chemically comparatively stable properties, and thus, there is no concern that an environmental problem occurs, and the slag is easily subjected to disposal.

However, in a case where the waste LIB is treated in the dry treatment, a part of the valuable component, in particular, most of cobalt is distributed to the slag, and thus, it is inevitable that a recovery loss of cobalt occurs.

In addition, a metal that is obtained in the dry treatment is an alloy in the joint presence of the valuable component, and in order for reuse, it is necessary to perform purification in which each component is separated from the alloy, and impurities are removed.

Examples of an element separating method that has been generally used in the dry method include a method of performing slow cooling from a fused state at a high temperature, and thus, for example, of separating copper and lead from each other or separating lead and zinc from each other. However, in a case where copper and nickel are a main component, as with the waste LIB, copper and nickel have properties of being homogeneously melted in the entire composition range, and thus, even in the case of performing slow cooling, copper and nickel are mixed and solidified into the shape of a layer, but are not capable of being separated.

Further, there is also purification in which nickel is subjected to a disproportionation reaction by using carbon monoxide (CO) gas, and is volatilized, and thus, is separated from copper or cobalt, but very toxic CO gas is used, and thus, it is difficult to ensure safety.

In addition, examples of a method for separating copper and nickel from each other that has been industrially performed include a method of roughly separating a mixed mat (a sulfide). In such a method, a mat containing copper and nickel is generated in a smelting process, and as with the case described above, is slowly cooled, and thus, is separated into a sulfide rich in copper and a sulfide rich in nickel. However, even in such a method, copper and nickel are only roughly separated from each other, and thus, in order to obtain nickel or copper having a high purity, a process such as separate electrolytic purification is required.

A method of using a vapor pressure difference through chloride has been also considered as the other method, but the method is a process of handling a large amount of toxic chlorine, and thus, it is difficult to say that the method is industrially suitable for device corrosion countermeasures, safety countermeasures, or the like.

In addition, the same applies to the separation between copper and cobalt and the separation between cobalt and nickel.

As described above, the separation and the purification of each element in the dry method are at a rough separation level or at a high cost, compared to a wet method.

On the other hand, in the wet treatment using a hydrometallurgical method using a method such as an acid, neutralization, or solvent extraction, the energy consumption is low, and mixed valuable components are respectively separated, and thus, can be directly recovered in a grade of a high purity.

However, in the case of treating the waste LIB by using the wet treatment, a hexafluorophosphate anion of an electrolytic solution component contained in the waste LIB is a difficult-to-treat material that is not capable of being completely decomposed even at a high temperature and a sulfuric acid of a high concentration, and is mixed into an acid solution in which a valuable component is leached. Further, the hexafluorophosphate anion is water-soluble carbonate ester, and thus, it is difficult to recover phosphorus or fluorine from an aqueous solution after the valuable resource is recovered, and it is difficult to suppress release to a public sea area or the like by a water drainage treatment.

In addition, it is not easy to obtain a solution that can be used for efficiently leaching and purifying the valuable component from the waste LIB with only an acid. It is difficult to leach the waste LIB itself, and a leaching rate of the valuable component is insufficient, or in the case of forcibly performing leaching by using an acid having strong oxidation power, a large amount of components that are not recovery target, such as aluminum, iron, or manganese, are also leached along with the valuable component, an addition amount of a neutralizing agent for treating the components or a water drainage amount to be handled increases.

Further, in a case where the pH of a liquid is adjusted in order to pass through separating means such as solvent extraction or ion exchange from an acidic leachate, or the impurities are neutralized and fixed to a precipitate, a generation amount of a neutralized precipitate also increases, and thus, there are many problems from the viewpoint of ensuring a treatment place and ensuring stability.

Further, an electric charge may remain in the waste LIB, and in a case where the treatment is performed in such a state, there is a concern that exotherm, explosion, or the like is caused, and thus, a complicated procedure such as immersion in saline water and discharge is also required.

As described above, it is not possible to say that a method of treating the waste LIB by using only the wet treatment is an advantageous method.

Therefore, an attempt has been made in which the waste LIB that is difficult to be treated by only the dry treatment or the wet treatment described above, is treated by a method in which the dry treatment and the wet treatment are combined, that is, the impurities are maximally removed by the dry treatment such as roasting the waste LIB to obtain a homogeneous treated material of the waste LIB, and the treated material is subjected to the wet treatment to be divided into the valuable component and the other components.

In the method in which the dry treatment and the wet treatment are combined, fluorine or phosphorus in the electrolytic solution is removed by being volatilized in the dry treatment, and plastics that are structural parts of the waste LIB or members of an organic material such as a separator are decomposed.

However, in the case of performing the dry treatment as described above, the recovery loss due to the distribution of cobalt contained in the waste LIB to the slag still remains as a problem.

A method is also considered in which an atmosphere, a temperature, a reduction degree, or the like in the dry treatment is adjusted, and thus, cobalt is distributed as a metal, and is reduced and melted to decrease the distribution to the slag, but in this case, the metal obtained by such a method forms a poorly-soluble corrosion-resistant alloy based on copper, containing nickel and cobalt, and even in the case of dissolving the alloy with an acid in order to separate and recover the valuable component, it is difficult to dissolve the alloy.

In addition, for example, in the case of performing acid dissolution with respect to the corrosion-resistant alloy described above by using chlorine gas, a lysate (a leachate) to be obtained contains copper at a high concentration and nickel or cobalt at a comparatively low concentration. Among them, it is not so difficult to separate nickel and cobalt by using a known method such as solvent extraction. However, it is not easy to separate a large amount of copper from nickel or cobalt easily and at a low cost.

As described above, it is difficult to efficiently separate only copper, nickel, and cobalt from the waste LIB containing various components that are not recovery targets, in addition to copper, nickel, or cobalt that is the valuable component.

Note that, the problems described above also occur in the case of separating copper, nickel, and cobalt from the waste cell containing copper, nickel, and cobalt other than the waste LIB, and also occur in the case of separating copper, nickel, and cobalt from an alloy containing copper, nickel, and cobalt derived from other than the waste cell. CN106505272A discloses a method of recovering Cu, Ni and Co from waste Li-ion batteries with a nitric acid leach.

Patent Document 1: Japanese Unexamined Patent Application, Publication No. 2012-172169 Patent Document 2: Japanese Unexamined Patent Application, Publication No. S63-259033

### DISCLOSURE OF THE INVENTION

### Problems to be Solved by the Invention

The present invention has been made in consideration of such circumstances, and an object thereof is to provide a method for separating copper from nickel and cobalt in which it is possible to efficiently and selectively separate copper from nickel and cobalt from an alloy containing copper, nickel, and cobalt such as an alloy having high corrosion resistance, containing copper, nickel, and cobalt, which is obtained by performing the dry treatment with respect to the waste lithium ion cell.

### Means for Solving the Problems

The present inventors have conducted intensive studies in order to attain the object described above. As a result thereof, it has been found that an alloy containing copper, nickel, and cobalt is brought into contact with a nitric acid in the joint presence of a sulfurizing agent, and thus, it is possible for copper that is leached from the alloy containing copper, nickel, and cobalt to be precipitated as copper sulfide (a solid), and it is possible for nickel and cobalt that are leached to remain in a leachate, and therefore, it is possible to efficiently and selectively separate copper from nickel and cobalt, from the alloy containing copper, nickel, and cobalt, and the present invention has been completed. The present invention is disclosed in the appended claims.

### Effects of the Invention

According to the present invention, it is possible to efficiently and selectively separate copper from nickel and cobalt, from the alloy containing copper, nickel, and cobalt, and for example, it is possible to efficiently and selectively separate nickel and cobalt from copper, from a poorly-soluble copper alloy containing nickel and cobalt that are obtained by heating and melting, and reducing a waste lithium ion cell.

Then, nickel and cobalt that are separated from the alloy by the present invention can be separated by a known method, and can be respectively effectively reused as a metal such as nickel or cobalt, or salts of a high purity. In addition, copper that is separated from the alloy is in the form of a sulfide that is suitable for copper smelting, and is directly put into a converter of a copper smelting furnace, and is subjected to electrolytic purification or the like, and thus, it is possible to recover copper of a high purity.

### BRIEF DESCRIPTION OF THE DRAWINGS

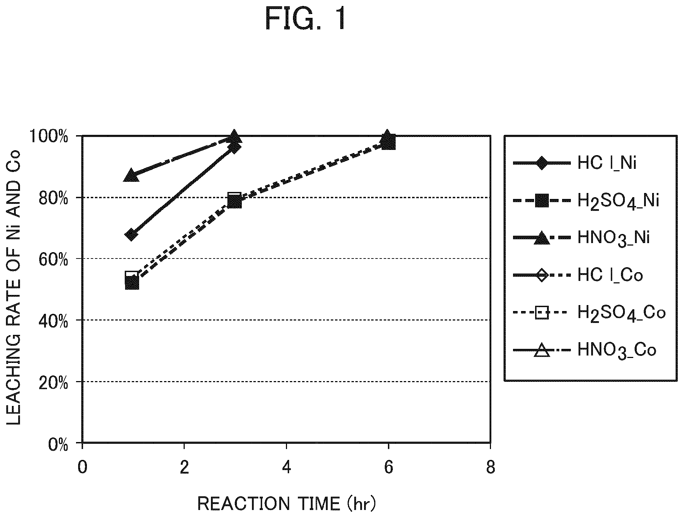

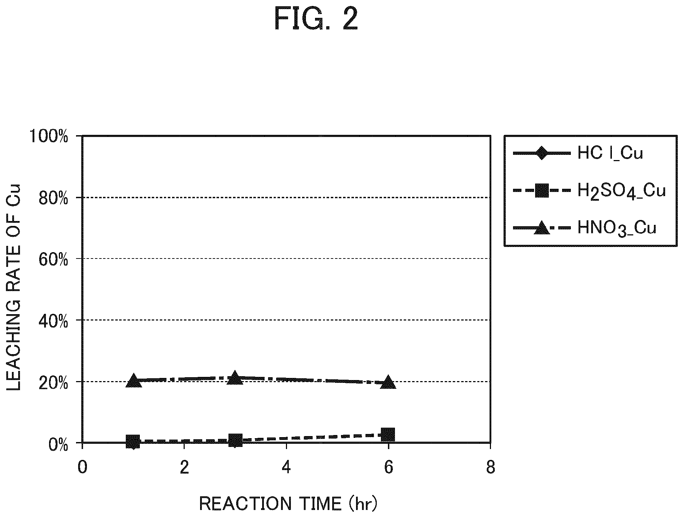

Fig. 1 is a diagram illustrating a relationship between a reaction time and a leaching rate of nickel and cobalt, at 2 equivalents of each of a nitric acid, a hydrochloric acid, and a sulfuric acid. Fig. 2 is a diagram illustrating a relationship between the reaction time and a leaching rate of copper, at 2 equivalents of each of the nitric acid, the hydrochloric acid, and the sulfuric acid.

### PREFERRED MODE FOR CARRYING OUT THE INVENTION

Hereinafter, an embodiment of the present invention will be described. Note that, herein, the expression of "X to Y" (X and Y are an arbitrary numerical value) indicates "greater than or equal to X and less than or equal to Y".

A method for separating copper from nickel and cobalt according to this embodiment (hereinafter, simply referred to as a "separating method") is a method for separating copper from nickel and cobalt, from an alloy containing copper, nickel, and cobalt (hereinafter, may be simply referred to as an "alloy"). Specifically, in the separating method, the alloy containing copper, nickel, and cobalt is brought into contact with a nitric acid in the joint presence of a sulfurizing agent, and a solid containing copper and a leachate containing nickel and cobalt are obtained.

A treatment target of the separating method according to this embodiment is the alloy containing copper, nickel, and cobalt. In the invention, the alloy is an alloy obtained by heating and melting, and reducing a scrap of a lithium ion cell (also referred to as a "waste lithium ion cell") that is generated in accordance with the deterioration of a car, an electronic device, or the like, or the lifetime of the lithium ion cell, that is, an alloy obtained by performing a dry treatment with respect to the waste cell. Note that, it is possible to remove components such as an organic solvent, aluminum, iron, manganese, phosphorus, fluorine, and carbon by performing the dry treatment.

In addition, the alloy obtained by heating and melting, and reducing the waste cell, for example, may be cast into the shape of a plate, and may be used as the treatment target of the separating method of this embodiment. In addition, a powder material such as an alloy powder that is obtained by applying an atomization method to a molten metal of the alloy obtained by heating and melting, and reducing the waste cell may be used as the treatment target. Note that, the atomization method is a method of obtaining a powder by bringing the molten metal into contact with gas or water of a high pressure, and by scattering and rapidly cooling (coagulating) the molten metal. In addition, a rod material that is obtained by linearly drawing out and suitably cutting the molten metal may be used as the treatment target.

In the case of the powder material, it is preferable that a particle diameter of the alloy is less than or equal to approximately 300 µm, since the alloy is easily treated. On the other hand, in a case where the particle diameter is excessively small, the cost increases, and dust or ignition is caused, and thus, it is preferable that the particle diameter of the alloy is greater than or equal to approximately 10 µm.

The alloy obtained by performing the dry treatment with respect to the lithium ion cell is a poorly-soluble copper alloy having high corrosion resistance, and in the related art, it is difficult to efficiently and selectively separate copper, nickel, and cobalt, but in the separating method according to this embodiment, it is possible to efficiently and selectively separate copper, nickel, and cobalt.

Note that, herein, the waste cell indicates not only a cell that has been used, but also a defective product or the like in a manufacturing process. In addition, it is sufficient that the treatment target includes the waste cell, and other metals or resins in addition to the waste cell may be suitably added. In this case, herein, the waste cell includes other metals or resins.

In this embodiment, such an alloy is brought into contact with the nitric acid in the joint presence of the sulfurizing agent. Accordingly, it is possible to precipitate copper that is leached from the alloy as copper sulfide, and to obtain the solid containing copper. On the other hand, nickel and cobalt that are leached remain in the leachate. Accordingly, as described in examples, it is possible to efficiently and selectively separate copper from nickel and cobalt. Copper is precipitated as a sulfide, and thus, it is possible for copper to hardly exist in the leachate, and it is possible for nickel and cobalt to exist in an acidic solution (the leachate) at an extremely high ratio. Therefore, according to the present invention, selectivity is extremely high, and thus, it is possible to separate copper from nickel and cobalt.

In addition, as with this embodiment, it is possible to increase a reaction rate of nickel or cobalt, that is, a leaching rate of nickel or cobalt with respect to a leachate, by using a nitric acid, compared to the case of using a hydrochloric acid or a sulfuric acid that is an acid other than the nitric acid.

A reaction that occurs by bringing the sulfurizing agent and the nitric acid into contact with the alloy is represented by the following reaction formulas. In the following formulas, an example is represented in which solid sulfur (S) is used as the sulfurizing agent. As represented in the following formulas, the reaction occurs by bringing the alloy into contact with the sulfurizing agent, and thus, a sulfide of leached copper is generated. In addition, nickel or cobalt is leached by the nitric acid, and exists in the leachate as an ion. Note that, even in a case where leached nickel or cobalt reacts with the sulfurizing agent, and thus, the sulfide is generated, there is the nitric acid, and thus, a sulfide of nickel or cobalt is decomposed, and nickel or cobalt exists in the leachate. Reaction Formulas

Cu+S→CuS (1)

Ni+2HNO₃→Ni(NO₃)₂+H₂ (2)

NiS+2HNO₃→Ni(NO₃)₂+H₂S (2)'

Co+2HNO₃→Co(NO₃)₂+H₂ (3)

CoS+2HNO₃→Co(NO₃)₂+H₂S (3)'

Elemental sulfur can be used as the sulfurizing agent, and a liquid sulfurizing agent or a gas sulfurizing agent such as sodium hydrogen sulfide (sodium hydride sulfide), sodium sulfide, and hydrogen sulfide gas may be used.

The amount of nitric acid that is brought into contact with the alloy is greater than or equal to 1 equivalent that is obtained by Formulas (2) and (3) described above, is preferably greater than or equal to 1.2 equivalents, is more preferably greater than or equal to 1.2 equivalents and less than or equal to 11 equivalents, with respect to the total amount of nickel and cobalt contained in the alloy. Note that, it is possible to increase a reaction rate by increasing an acid concentration.

In addition, it is preferable that the amount of sulfurizing agent is greater than or equal to 1 equivalent that is obtained by Formula (1) described above, with respect to the amount of copper contained in the alloy.

A slurry concentration that is obtained by adding the nitric acid and the sulfurizing agent to the alloy, that is, a ratio of the mass of the alloy to the volume of a slurry (Mass of Alloy Containing Copper, Nickel, and Cobalt/Volume of Slurry) is preferably greater than or equal to 20 g/l.

In addition, the nitric acid has strong oxidation power, and thus, in the case of using a concentrated nitric acid, there is a concern that not only the handling is dangerous but also copper is eluted without being sulfurized, or a sulfurizing agent such as sulfur was decomposed. Therefore, it is desirable that the nitric acid is used by being diluted to a concentration of approximately 20 mass% to 50 mass%.

A reaction temperature, for example, is higher than or equal to 50°C, is preferably higher than or equal to 75°C, and is more preferably higher than or equal to 95°C, and it is preferable that such a temperature is maintained during the reaction. In a case where the reaction temperature is higher than or equal to 95°C, for example, it is possible to remarkably increase the reaction rate, compared to a case where the reaction is performed at a reaction temperature of lower than 75°C. In addition, a reaction time, for example, is 1 hour to 6 hours.

Note that, the nitric acid and the sulfurizing agent are simultaneously brought into contact with the alloy, or the sulfurizing agent is brought into contact with the alloy first, and then, the nitric acid is brought into contact with the alloy. In a case where the nitric acid is brought into contact with the alloy, in a state where there is no sulfurizing agent, as with the related art, a leaching rate of a valuable component is insufficient, and a part of a component that contained in the alloy but is not a recovery target, such as iron, may be also leached, and a load in the subsequent purification process increases.

A method of bringing the nitric acid or the sulfurizing agent into contact with the alloy is not particularly limited, and for example, the alloy or the sulfurizing agent may be added to the nitric acid, and may be mixed, and as necessary, may be stirred. In addition, in order to bring the sulfurizing agent into contact with the alloy, a solid sulfurizing agent may be contained in or applied to the alloy in the dry treatment.

According to this embodiment, it is possible to separate copper from nickel and cobalt, but it is not preferable that a part of copper that is leached from the alloy remains in the leachate, and copper is directly emitted from a leaching facility or the like, since a load in a process of separating nickel and cobalt increases.

For this reason, a copper removal facility for removing copper that remains in the leachate may be provided in an outlet of a reaction bath in which the separating method of this embodiment is performed, copper removal may be completely performed, and the leachate may be supplied to the process of separating nickel and cobalt. Examples of a method of removing copper that remains in the leachate include adding the sulfurizing agent, electrowinning, generating a neutralized precipitate by adding a neutralizing agent, and the like.

As described above, according to the method for separating copper from nickel and cobalt, of this embodiment, it is possible to form a leaching residue as the copper sulfide by sulfurizing copper in the alloy containing copper, nickel, and cobalt, and to efficiently and selectively separate nickel and cobalt that remain in the leachate.

Note that, the copper sulfide obtained by the method for separating copper from nickel and cobalt, of this embodiment is directly supplied as a raw material of a known copper smelting process, and thus, it is possible to obtain an anode, and to obtain copper of a high purity by performing electrolytic purification with respect to the anode.

In addition, nickel and cobalt leached in the leachate are supplied to a known nickel smelting process, and thus, it is possible to obtain a nickel metal or a cobalt metal by separating and electrowinning nickel and cobalt with solvent extraction or the like, or it is possible to purify nickel and cobalt as a nickel salt or a cobalt salt to be recycled as a raw material of the lithium ion cell.

### EXAMPLES

Hereinafter, the present invention will be described in more detail by examples, but the present invention is not limited to the following examples.

### (Examples 1 to 3) Nitric Acid

A waste lithium ion cell (a waste LIB) was subjected to a dry treatment in which heating and melting, and reducing were performed, a molten metal of an alloy containing copper, nickel, and cobalt was obtained, the molten metal flowed into a small crucible having a hole in a bottom surface, gas or water of a high pressure was sprayed to the molten metal flowing out of the hole, and the molten metal was scattered and coagulated, and was sieved, and thus, an alloy powder having a particle diameter of less than or equal to 300 µm (hereinafter, the alloy powder is also conveniently referred to as an "atomized powder") was obtained. Results of analyzing the obtained alloy powder by using an ICP analysis device are shown in Table 1.

Next, 1.0 g of the alloy powder described above was sampled. In addition, 0.35 g of elemental sulfur (a sulfur solid) that was 1 equivalent for forming the copper sulfide represented by Formula (1) described above with respect to a copper grade in the alloy powder was prepared.

In addition, 10 ml of a 14N-nitric acid that was 2 equivalents calculated by Formulas (2) and (3) described above was measured with respect to the total amount of nickel and cobalt contained in the alloy powder, and the nitric acid was diluted to 50 ml.

The nitric acid was subjected to temperature rising to 95°C, and 1.0 g of the alloy powder and 0.35 g of sulfur were simultaneously added, were stirred for 1 hour to 6 hours. After the stirring was performed for each time, solid-liquid separation was performed by filtration, a filtrate was analyzed by using an ICP analysis device, and the concentration of each component of copper, nickel, cobalt, iron, and sulfur was obtained. The leaching conditions described above and ICP measurement results of each of the examples are shown in Table 2. In Table 2, a stirring time is represented as "Time", and a rising temperature is represented as "Temperature". Results of measuring the mass of a filtration residue, and a liquid amount after the filtration, pH, and an oxidation-reduction potential ORP (based on Silver/Silver Chloride Electrode) are also shown in Table 2. In addition, results of obtaining a leaching rate of each element of copper, nickel, cobalt, and iron are shown in Table 3. The leaching rate was obtained by dividing the mass of a target element in the filtrate by the mass of the target element in the atomized powder. A relationship between a reaction time and a leaching rate of nickel and cobalt is illustrated in Fig. 1, and a relationship between the reaction time and a leaching rate of copper is illustrated in Fig. 2.

**[Table 1]**

| | ICP analysis value (%) | | | | | |
|---|---|---|---|---|---|---|
| | Cu | Ni | Co | Fe | Mn | S |
| Atomized powder | 76% | 12% | 12% | 1.5% | 0.06% | <0.1% |

**[Table 2]**

| | Atomized powder (9) | Acid | | | S | | Time (hr) | Temperature (°C) | Residue (9) | After filtration | | | Filtrate: ICP analysis value (g/1) | | | | |
|---|---|---|---|---|---|---|---|---|---|---|---|---|---|---|---|---|---|
| | | Type | Equivalent (vsCo, Ni) | Liquid amount (ml) | Equivalent (vsCu) | Amount (g) | | | | Liquid amount (ml) | pH | ORP (mV) | Cu | Ni | Co | Fe | S |
| Example 1 | 1.0 | HNO₃(14N) | 2 | 1.2 | 1 | 0.35 | 1 | 95 | - | 50 | - | - | 3.08 | 2.09 | 2.10 | 0.25 | 0.03 |
| Example 2 | 1.0 | HNO₃(14N) | 2 | 1.2 | 1 | 0.35 | 3 | 95 | - | 49 | - | - | 3.25 | 2.46 | 2.48 | 0.041 | 0.032 |
| Example 3 | 1.0 | HNO₃(14N) | 2 | 1.2 | 1 | 0.35 | 6 | 95 | 1.01 | 48.5 | 4.78 | 387 | 2.98 | 2.51 | 2.51 | 0.0003 | 0.006 |
| Comparative Example 1 | 1.0 | HNO₃(14N) | 2 | 1.2 | - | - | 3 | 95 | 1.01 | 50 | 4.9 | 370 | 14.2 | 2.36 | 2.34 | 0.29 | 0.031 |
| Test Example 1 | 1.0 | HCl(11.64N) | 2 | 1.44 | 1 | 0.35 | 3 | 95 | 0.98 | 44 | 0.81 | 274 | 0.002 | 2.62 | 2.64 | 0.32 | 0.017 |
| Test Example 2 | 1.0 | HCl(11.64N) | 2 | 1.44 | 1 | 0.35 | 1 | 95 | 1.09 | 47.5 | 0.75 | 120 | 0.0002 | 1.72 | 1.78 | 0.22 | 0.004 |
| Comparative Example 2 | 1.0 | HCl(11.64N) | 3.7 | 2.6 | - | - | 2 | 75 | - | 12 | - | - | 31 | 6.0 | 6.1 | 0.76 | - |
| Test Example 3 | 1.0 | H₂SO₄(64%) | 2 | 0.84 | 1 | 0.35 | 1 | 95 | - | 50 | - | - | 0.009 | 1.25 | 1.29 | 0.16 | 4.36 |
| Test Example 4 | 1.0 | H₂SO₄(64%) | 2 | 0.84 | 1 | 0.35 | 3 | 95 | - | 49 | - | - | 0.019 | 1.93 | 1. 95 | 0.24 | 4.45 |
| Test Example 5 | 1.0 | H₂SO₄(64%) | 2 | 0.84 | 1 | 0.35 | 6 | 95 | 0.99 | 47 | 1.3 | 350 | 0.370 | 2.45 | 2.47 | 0.3 | 5.13 |
| Comparative Example 3 | 1.1 | H₂SO₄(64%) | 23.8 | 10.2 | - | - | 4 | 75 | - | 50 | -0.36 | 562 | 0.51 | 0.16 | 0.17 | 0.027 | - |
| Comparative Example 4 | 0.17 | H₂SO₄(64%) | 70 | 5 | - | - | 4 | 75 | - | 20 | - | >1000 | 6.7 | 1.0 | 1.1 | 0.13 | - |

**[Table 3]**

| | Leaching rate (filtrate/atomized powder) | | | |
|---|---|---|---|---|
| | Cu | Ni | Co | Fe |
| Example 1 | 20% | 87% | 88% | 83% |
| Example 2 | 21% | 100% | 100% | 13% |
| Example 3 | 19% | 100% | 100% | 0.1% |
| Comparative Example 1 | 93% | 98% | 98% | 97.0% |
| Test Example 1 | 0.0% | 96% | 97% | 94% |
| Test Example 2 | 0.0% | 68% | 70% | 70% |
| Comparative Example 2 | 49% | 60% | 61% | 61% |
| Test Example 3 | 0.1% | 52% | 54% | 53% |
| Test Example 4 | 0.1% | 79% | 80% | 78% |
| Test Example 5 | 2.3% | 96% | 97% | 94% |
| Comparative Example 3 | 3 % | 6 % | 6 % | 8 % |
| Comparative Example 4 | 100% | 98% | 100% | 100% |

### (Comparative Example 1) Nitric Acid

1.0 g of an alloy powder having a particle diameter of less than or equal to 300 µm that was obtained as with Example 1 was sampled. Next, a solution was prepared in which a nitric acid of 2 equivalents with respect to the total amount of nickel and cobalt contained in the alloy powder was diluted to 50 ml, and the solution was subjected to the temperature rising to 95°C.

Next, 1.0 g of the alloy powder described above was added, and was stirred for 3 hours. After that, solid-liquid separation was performed by filtration, and as with Examples 1 to 3, a filtrate was analyzed by using an ICP analysis device, and the concentration of each component was obtained. The leaching conditions of Comparative Example 1 and ICP measurement results are shown in Table 2. Results of measuring the mass of a filtration residue, and a liquid amount after the filtration, pH, and an oxidation-reduction potential ORP (based on Silver/Silver Chloride Electrode) are also shown in Table 2. In addition, results of obtaining a leaching rate of each element of copper, nickel, cobalt, and iron, as with Examples 1 to 3, are shown in Table 3.

### (Test Examples 1 and 2) Hydrochloric Acid

1.0 g of an alloy powder having a particle diameter of less than or equal to 300 µm that was obtained as with Example 1 was sampled. In addition, 0.35 g of elemental sulfur (a sulfur solid) that was 1 equivalent for forming the copper sulfide represented by Formula (1) described above with respect to a copper grade in the alloy powder was prepared.

In addition, a hydrochloric acid of 2 equivalents calculated by the following formulas was separated with respect to the total amount of nickel and cobalt contained in the alloy powder, and was diluted to 50 ml.

Ni+2HCl→NiCl₂+H₂

Co+2HCl→CoCl₂+H₂

The hydrochloric acid was subjected to temperature rising to 95°C, and 1.0 g of the alloy powder and 0.35 g of sulfur were simultaneously added, and were stirred for 1 hour to 3 hours. After the stirring was performed for each time, solid-liquid separation was performed by filtration, as with Examples 1 to 3, a filtrate was analyzed by using an ICP analysis device, and the concentration of each component was obtained. The leaching conditions of each of the test examples and ICP measurement results are shown in Table 2. Results of measuring the mass of a filtration residue, and a liquid amount after the filtration, pH, and an oxidation-reduction potential ORP (based on Silver/Silver Chloride Electrode) are also shown in Table 2. In addition, results of obtaining a leaching rate of each element of copper, nickel, cobalt, and iron, as with Examples 1 to 3, are shown in Table 3. In addition, the relationship between the reaction time and the leaching rate of nickel and cobalt is illustrated in Fig. 1.

### (Comparative Example 2) Hydrochloric Acid

1.0 g of an alloy powder having a particle diameter of less than or equal to 300 µm that was obtained as with Example 1 was sampled. Next, a solution was prepared in which a hydrochloric acid of 3.7 equivalents with respect to the total amount of nickel and cobalt contained in the alloy powder was diluted to 15 ml, and the solution was subjected to temperature rising to 75°C.

Next, 1.0 g of the alloy powder described above was added, and was stirred for 2 hours. After that, solid-liquid separation was performed by filtration, and as with Examples 1 to 3, a filtrate was analyzed by using an ICP analysis device, and the concentration of each component was obtained. The leaching conditions of Comparative Example 2 and ICP measurement results are shown in Table 2. Results of measuring a liquid amount after the filtration are also shown in Table 2. In addition, results of obtaining a leaching rate of each element of copper, nickel, cobalt, and iron, as with Examples 1 to 3 are shown in Table 3.

### (Test Examples 3 to 5) Sulfuric Acid

1.0 g of an alloy powder having a particle diameter of less than or equal to 300 µm that was obtained as with Example 1 was sampled. In addition, 0.35 g of elemental sulfur (a sulfur solid) that was 1 equivalent for forming the copper sulfide represented by Formula (1) described above with respect to a copper grade in the alloy powder was prepared.

In addition, a sulfuric acid of 2 equivalents calculated by the following formulas was separated with respect to the total amount of nickel and cobalt contained in the alloy powder, and was diluted to 50 ml.

Ni+H₂SO₄→NiSO₄+H₂

Co+H₂SO₄→CoSO₄+H₂

The sulfuric acid was subjected to temperature rising to 95°C, and 1.0 g of the alloy powder and 0.35 g of sulfur were simultaneously added, and were stirred for 1 hour to 6 hours. After the stirring was performed for each time, solid-liquid separation was performed by filtration, as with Examples 1 to 3, a filtrate was analyzed by using an ICP analysis device, and the concentration of each component was obtained. The leaching conditions of each of the test examples and ICP measurement results are shown in Table 2. In Table 2, a stirring time is represented as "Time", and a rising temperature is represented as "Temperature". Results of measuring the mass of a filtration residue, and a liquid amount after the filtration, pH, and an oxidation-reduction potential ORP (based on Silver/Silver Chloride Electrode) are also shown in Table 2. In addition, results of obtaining a leaching rate of each element of copper, nickel, cobalt, and iron, as with Examples 1 to 3, are shown in Table 3. In addition, the relationship between the reaction time and the leaching rate of nickel and cobalt is illustrated in Fig. 1.

### (Comparative Example 3) Sulfuric Acid

1.1 g of an alloy powder having a particle diameter of less than or equal to 300 µm that was obtained as with Example 1 was sampled. Next, a solution was prepared in which a sulfuric acid of 23.8 equivalents was separated with respect to the total amount of nickel and cobalt contained in the alloy powder, and was diluted to 50 ml, and the solution was subjected to temperature rising to 75°C.

Next, the alloy powder described above was added, and was stirred for 4 hours. At this time, a sulfurizing agent was not added. After that, solid-liquid separation was performed by filtration, a filtrate was analyzed by using an ICP analysis device, and the concentration of each component of copper, nickel, cobalt, iron, and sulfur was obtained. The leaching conditions described above and ICP measurement results are shown in Table 2. Results of measuring a liquid amount after the filtration, pH, and an ORP are also shown in Table 2. In addition, results of obtaining a leaching rate of each element of copper, nickel, cobalt, and iron are shown in Table 3.

### (Comparative Example 4)

0.17 g of an alloy powder having a particle diameter of less than or equal to 300 µm that was obtained as with Example 1 was sampled. Next, a solution was prepared in which a sulfuric acid of 70 equivalents was separated with respect to the total amount of nickel and cobalt contained in the alloy powder, and was diluted to 20 ml, and the solution was subjected to temperature rising to 75°C.

Next, the alloy powder described above was added, and was stirred for 4 hours. Note that, Na sulfate was added to the solution being dissolved by the sulfuric acid of 70 equivalents until the ORP was greater than or equal to 1000 mV. After that, solid-liquid separation was performed by filtration, a filtrate was analyzed by using an ICP analysis device, and the concentration of each component of copper, nickel, cobalt, iron, and sulfur was obtained. The leaching conditions described above and ICP measurement results are shown in Table 2. Results of measuring a liquid amount after the filtration and an ORP are also shown in Table 2. In addition, results of obtaining a leaching rate of each element of copper, nickel, cobalt, and iron are shown in Table 3.

As shown in Tables 2 and 3, and Figs. 1 and 2, in Examples 1 to 3, nickel and cobalt were capable of being leached, and copper was also slightly leached, but selective leaching of nickel and cobalt, which is the basis of the present invention, was found. Specifically, the leaching rate of nickel and cobalt was greater than or equal to 80%, and was considerably higher than the leaching rate of copper in each of the examples. From such results, it was found that the alloy containing copper, nickel, and cobalt was brought into contact with the nitric acid in the joint presence of a sulfurizing agent, and thus, copper was precipitated as the copper sulfide, nickel and cobalt were selectively leached in the leachate, and copper was capable of being efficiently and selectively separated from nickel and cobalt, from the alloy.

In addition, as shown in Tables 2 and 3, and Figs. 1 and 2, in Examples 1 to 3 in which the alloy was brought into contact with the nitric acid in the joint presence of the sulfurizing agent, the reaction rate was higher than that in Test Examples 1 and 2 in which the alloy was brought into contact with the hydrochloric acid in the joint presence of the sulfurizing agent or Test Examples 3 to 5 in which the alloy was brought into contact with the sulfuric acid.

In addition, in Comparative Example 1 in which the alloy was brought into contact with the nitric acid not in the joint presence of the sulfurizing agent, as shown in Tables 2 and 3, it was found that approximately the total amount of copper, nickel, cobalt, and iron was dissolved, leaching was performed without selectivity, and it was difficult to separate copper from nickel and cobalt.

In Comparative Example 2 in which the alloy was brought into contact with the hydrochloric acid not in the joint presence of the sulfurizing agent, as shown in Tables 2 and 3, the leaching rate of copper, nickel, cobalt, and iron was approximately 50% to 60%, which was an insufficient value as a leaching rate of a valuable component, and the leaching was simultaneously and uniformly performed, and thus, the separation of the valuable component and a component that was not necessary to be recovered was also insufficient.

In addition, in a case where the alloy was brought into contact with the sulfuric acid not in the joint presence of the sulfurizing agent, as shown in Tables 2 and 3, in Comparative Example 3 in which Na sulfate was not added, it was found that the leaching rate of copper, nickel, cobalt, and iron was approximately 5%, and the leaching was performed without the selectivity. In addition, in Comparative Example 4 in which Na sulfate that was an oxidant, but not the sulfurizing agent, was added, it was found that approximately the total amount of copper, nickel, cobalt, and iron was dissolved, and the leaching was performed without the selectivity.

As described above, in Comparative Examples 1 to 4 in which the sulfurizing agent was not added, it was found that the leaching was performed without the selectivity, and it was difficult to separate copper from nickel and cobalt.

## Claims

1. A method for separating copper from nickel and cobalt, the copper and the nickel and cobalt being separated from an alloy containing copper, nickel, and cobalt,
wherein the alloy containing copper, nickel, and cobalt is an alloy that is obtained by heating and melting, and reducing scrap of a lithium ion cell,
wherein the alloy containing copper, nickel, and cobalt is brought into contact with a nitric acid in a joint presence of a sulfurizing agent, and a solid containing copper and a leachate containing nickel and cobalt are obtained,
wherein an amount of the nitric acid is greater than or equal to 1 equivalent with respect to a total amount of nickel and cobalt contained in the alloy, and
wherein the nitric acid and the sulfurizing agent are simultaneously brought into contact with the alloy containing copper, nickel, and cobalt, or the sulfurizing agent is brought into contact with the alloy, and then, the nitric acid is brought into contact with the alloy.

2. The method for separating copper from nickel and cobalt according to claim 1,
wherein the sulfurizing agent is one or more types selected from sulfur, hydrogen sulfide gas, sodium hydrogen sulfide, and sodium sulfide.

3. The method for separating copper from nickel and cobalt according to claim 1 or claim 2,
wherein the alloy containing copper, nickel, and cobalt is a powder material, and a particle diameter of the alloy containing copper, nickel, and cobalt is less than or equal to 300 µm, as obtained by sieving.

4. The method for separating copper from nickel and cobalt according to any one of claims 1 to 3,
wherein the solid containing copper and the leachate containing nickel and cobalt are separated, and then, copper remaining in the leachate containing nickel and cobalt is removed.

5. The method for separating copper from nickel and cobalt according to claim 4,
wherein copper remaining in the leachate containing nickel and cobalt is removed by one or more types of methods selected from sulfurizing, electrowinning, and neutralizing and precipitating.

## Patentansprüche

1. Verfahren zur Abscheidung von Kupfer, Nickel und Kobalt, wobei das Kupfer und das Nickel und das Kobalt aus einer Legierung abgeschieden werden, die Kupfer, Nickel und Kobalt enthält,
wobei die Legierung, die Kupfer, Nickel und Kobalt enthält, eine Legierung ist, die durch Erhitzen und Schmelzen und Reduzieren von Abfall einer Lithium-Ionen-Zelle erhalten wird,
wobei die Legierung, die Kupfer, Nickel und Kobalt enthält, in einer gemeinsamen Anwesenheit eines Schwefelungsmittels mit einer Salpetersäure in Kontakt gebracht wird und ein Feststoff, der Kupfer enthält, und ein Perkolat, das Nickel und Kobalt enthält, erhalten werden,
wobei eine Menge der Salpetersäure größer als oder gleich groß ist wie 1 Äquivalent in Bezug auf eine Gesamtmenge von Nickel und Kobalt, die in der Legierung enthalten sind, und
wobei die Salpetersäure und das Schwefelungsmittel gleichzeitig mit der Legierung, die Kupfer, Nickel und Kobalt enthält, in Kontakt gebracht werden oder das Schwefelungsmittel mit der Legierung in Kontakt gebracht wird und dann die Salpetersäure mit der Legierung in Kontakt gebracht wird.

2. Verfahren zur Abscheidung von Kupfer, Nickel und Kobalt nach Anspruch 1,
wobei das Schwefelungsmittel ein oder mehrere Typen ist, ausgewählt aus Schwefel, Schwefelwasserstoffgas, Natriumhydrogensulfid und Natriumsulfid.

3. Verfahren zur Abscheidung von Kupfer, Nickel und Kobalt nach Anspruch 1 oder Anspruch 2,
wobei die Legierung, die Kupfer, Nickel und Kobalt enthält, ein Pulvermaterial ist und ein Partikeldurchmesser der Legierung, die Kupfer, Nickel und Kobalt enthält, weniger als oder gleich groß wie 300 µm ist, wie es durch Sieben erhalten wurde.

4. Verfahren zur Abscheidung von Kupfer, Nickel und Kobalt nach einem der Ansprüche 1 bis 3,
wobei der Feststoff, der Kupfer enthält, und das Perkolat, das Nickel und Kobalt enthält, abgeschieden werden und dann Kupfer, das in dem Perkolat verblieben ist, das Nickel und Kobalt enthält, entfernt wird.

5. Verfahren zur Abscheidung von Kupfer, Nickel und Kobalt nach Anspruch 4,
wobei Kupfer, das in dem Perkolat verblieben ist, das Nickel und Kobalt enthält, durch einen oder mehrere Typen von Verfahren entfernt wird, ausgewählt aus Schwefelung, elektrolytischer Metallgewinnung und Neutralisieren und Fällen.

## Revendications

1. Procédé destiné à séparer du cuivre du nickel et du cobalt, le cuivre et le nickel et le cobalt étant séparés d'un alliage contenant du cuivre, du nickel et du cobalt,
dans lequel l'alliage contenant du cuivre, du nickel et du cobalt est un alliage qui est obtenu par chauffage et fusion et réduction de déchets d'une cellule lithium-ion,
dans lequel l'alliage contenant du cuivre, du nickel et du cobalt est mis en contact avec un acide nitrique en présence conjointe d'un agent de sulfuration et un solide contenant du cuivre et un lixiviat contenant du nickel et du cobalt sont obtenus,
dans lequel une quantité de l'acide nitrique est supérieure ou égale à 1 équivalent par rapport à une quantité totale de nickel et de cobalt contenus dans l'alliage, et
dans lequel l'acide nitrique et l'agent de sulfuration sont simultanément mis en contact avec l'alliage contenant du cuivre, du nickel et du cobalt ou l'agent de sulfuration est mis en contact avec l'alliage puis l'acide nitrique est mis en contact avec l'alliage.

2. Procédé destiné à séparer du cuivre du nickel et du cobalt selon la revendication 1,
dans lequel l'agent de sulfuration est un ou plusieurs types sélectionnés parmi le soufre, le sulfure d'hydrogène gazeux, l'hydrogénosulfure de sodium et le sulfure de sodium.

3. Procédé destiné à séparer du cuivre du nickel et du cobalt selon la revendication 1 ou la revendication 2,
dans lequel l'alliage contenant du cuivre, du nickel et du cobalt est un matériau en poudre et un diamètre de particules de l'alliage contenant du cuivre, du nickel et du cobalt est inférieur ou égal à 300 µm, tel qu'obtenu par tamisage.

4. Procédé destiné à séparer du cuivre du nickel et du cobalt selon l'une quelconque des revendications 1 à 3,
dans lequel le solide contenant du cuivre et le lixiviat contenant du nickel et du cobalt sont séparés puis le cuivre restant dans le lixiviat contenant du nickel et du cobalt est éliminé.

5. Procédé destiné à séparer du cuivre du nickel et du cobalt selon la revendication 4,
dans lequel le cuivre restant dans le lixiviat contenant du nickel et du cobalt est éliminé par un ou plusieurs types de procédés sélectionnés parmi la sulfuration, l'extraction par voie électrolytique et la neutralisation et la précipitation.
